# EUROPEAN PATENT APPLICATION

(11) **EP 4 674 508 A1**
(43) Date of publication of application: **07.01.2026**
(21) Application number: 24186255.6
(22) Date of filing: 03.07.2024
(51) Int. Cl.: B01D 53/14, B01D 53/18

(54) **A SYSTEM COMPRISING A WASH TOWER FOR GAS STREAMS COMPRISING AMMONIA**

(71) Applicant: Yara International ASA, 0277 Oslo (NO)
(72) Inventor: Shekhar Kumar, Chandra, 243201 Uttar Pradesh (IN); Kumar Agrawal, Kuldeep, 243201 Uttar Pradesh (IN)
(74) Representative: De Clercq & Partners

(57) **Abstract**

The present disclosure provides a system comprising a wash tower and a heat exchanger for cooling an aqueous solution. The present disclosure also provides a method for removing ammonia from a gas stream.

## Description

### Field of the disclosure

The present disclosure is related to the field of chemical engineering, in particular wash towers.

### Background information

Urea (H₂NCONH₂) is the most common nitrogen-containing fertilizer used today. Global annual production is estimated to be around 200 million tons. In addition to the use as fertilizer, urea is also used to produce other chemicals, and as a solution in diesel-powered vehicles to reduce nitrogen oxides emissions.

Urea-producing plants may use different technologies, such as the Stamicarbon or Saipem process, but they all rely on the same basic principles. In the synthesis section of a urea-producing plant, ammonia, and carbon dioxide (CO₂) are reacted under high pressure (above 130 bar) and high temperatures, to produce an aqueous solution comprising urea, ammonium carbamate, and free ammonia. This aqueous solution is then purified in a medium-pressure and/or a low-pressure recovery section and concentrated to obtain a urea melt. The urea melt can be diluted to obtain a urea aqueous solution which may be used in selective catalytic or non-catalytic reduction systems, such as diesel exhaust fluid, mixed with other nutrient sources, such as ammonium nitrate, to obtain aqueous solutions of urea ammonium nitrate, or solidified into urea-containing solids, such as granules or prills.

Some of these processes, for example the medium-pressure recovery section, may produce gas streams comprising several components, such as ammonia, hydrogen, methane, and oxygen. Such streams may be recycled to the reformer of an ammonia-producing to be used a fuel. However, it is important for such gas streams to have a very low ammonia content, for example below 0.1 weight%. To remove ammonia from a gas stream, different options are possible, and one option requires the use a wash tower. A wash tower is a vertical device, wherein a gas stream comprising ammonia, hydrogen, methane, and oxygen, is injected at its bottom, and travels through at least one absorption element where it comes into contact with liquid water or a liquid aqueous solution, which absorbs the ammonia comprised in the gas streams.

Urea-producing plants always try to increase their production rate and efficacy, which requires to improve each device involved in the production process, so there is a need to provide a method for improving the efficacy of a wash tower with minimal costs and disturbance to the rest of the plant.

### Summary of the disclosure

It was found that it was possible to improve the efficacy of a wash tower configured to remove ammonia from a gas stream by cooling the water being injected inside the wash tower.

In a first aspect, the present disclosure provides a system comprising a wash tower, the wash tower being a vertical device comprising a top end and a bottom end joined by a body, the wash tower comprising:
- a gas inlet for a gas stream comprising ammonia,
- a gas outlet for a gas stream depleted of ammonia,
- at least one liquid inlet for injecting an aqueous solution inside the body of the wash tower,
- one or more absorption elements or absorption sections located between the gas inlet and the gas outlet, and
- a liquid outlet for an aqueous solution comprising ammonia,
wherein:
- the liquid outlet is fluidly connected to the at least one liquid inlet for re-injecting the aqueous solution comprising ammonia back into the body of the wash tower, and
- the system further comprises a heat exchanger, wherein the heat exchanger is fluidly connected to the at least one liquid inlet and the liquid outlet, and the heat exchanger is configured for cooling down the aqueous solution comprising ammonia recovered from the liquid outlet.

In another aspect, the present disclosure provides a method for removing ammonia from a gas stream, the method comprising the steps of:
- a) providing a gas stream comprising ammonia to a wash tower;
- b) providing an aqueous solution to the wash tower;
- c) recovering an aqueous solution with an increased ammonia content and, separately, a gas stream depleted in ammonia from the wash tower;
- d) reducing the temperature of the aqueous solution recovered from the wash tower; and
- e) re-introducing a portion of the aqueous solution with a reduced temperature obtained in step d) into the wash tower.

### Brief description of the figures

The following description of the figures of a specific embodiment of a system according to the present disclosure is only given by way of example and is not intended to limit the present explanation, its application or use. In the figures, identical reference numerals refer to the same or similar parts and features.
Figure 1 shows an embodiment of a system according to the present disclosure.
Figure 2 shows another embodiment of a system according to the present disclosure.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

In a first aspect, the present disclosure provides a system comprising a wash tower, the wash tower being a vertical device comprising a top end and a bottom end joined by a body, the wash tower comprising:
- a gas inlet for a gas stream comprising ammonia,
- a gas outlet for a gas stream depleted of ammonia,
- at least one liquid inlet for injecting an aqueous solution inside the body of the wash tower,
- one or more absorption elements or absorption sections located between the gas inlet and the gas outlet, and
- a liquid outlet for an aqueous solution comprising ammonia,
wherein:
- the liquid outlet is fluidly connected to the at least one liquid inlet for re-injecting the aqueous solution comprising ammonia back into the body of the wash tower, and
- the system further comprises a heat exchanger, wherein the heat exchanger is fluidly connected to the at least one liquid inlet and the liquid outlet, and the heat exchanger is configured for cooling down the aqueous solution comprising ammonia recovered from the liquid outlet.

As used herein, a wash tower is a device configured to receive an aqueous solution, also referred to as a wash solution, and a gas stream comprising ammonia, and to produce an aqueous solution with an increased concentration in ammonia and a gas stream depleted in ammonia. Ammonia is soluble in water, so it is possible to remove ammonia from a gaseous stream by contacting a gaseous stream comprising ammonia with water or an aqueous solution.

It has been found that it is possible to improve the performance of a wash tower configured to remove ammonia from a gas stream by cooling the water used to absorb the gaseous ammonia.

In some conventional wash towers, a portion of the aqueous solution obtained at the outlet of the wash tower is re-injected back into the wash tower via a recycling loop, this reduces the overall water consumption of the urea-producing plant. It has been found that this recycling loop can be modified to comprise a heat exchanger designed for cooling the aqueous solution recovered from the liquid outlet of the wash tower.

The wash tower comprised in the system according to the first aspect of the present disclosure comprises a gas inlet for a gas stream comprising ammonia, a gas outlet for a gas stream depleted of ammonia, at least one liquid inlet for injecting an aqueous solution or wash solution inside the body of the wash tower, one or more absorption elements or absorption sections located between the gas inlet and the gas outlet, and a liquid outlet for an aqueous solution comprising ammonia.

The gas inlet is configured to receive a gas stream comprising ammonia. The gas inlet is connected to a device configured to produce a gas stream comprising ammonia in operation. The gas inlet may be connected to a sparger. A sparger is a device configured to introduce a gas stream into a liquid. In certain embodiments, the gas inlet and/or the sparger are positioned to ensure a bottom to top gas flow within the wash tower.

The gas outlet is configured to allow gases present in the wash tower to exit the wash tower. The gas stream recovered at the gas outlet may comprise different components, depending on the composition of the gas stream directed to the gas inlet of the wash tower. The gas outlet may be positioned at the top end of the wash tower.

The at least one liquid inlet is designed for injecting an aqueous solution or wash solution inside the body of the wash tower. The aqueous solution injected inside the wash tower interacts with the gas stream inside the wash tower, and absorbs the water-soluble components, such as ammonia, from the gas stream.

In some embodiments, the at least one liquid inlet is located near the top of the wash tower to increase the interaction time between the aqueous solution and the gas stream inside the wash tower. The at least one liquid inlet may be connected to one or more sprayers for spraying the aqueous solution into the wash tower.

The wash tower comprises one or more absorption elements or sections located between the gas inlet and the gas outlet. The rate of absorption of compounds from a gas stream to a liquid phase is highly dependent on the contact surface between the gas stream and the liquid phase. It is not very productive for a wash tower to be completely empty as the absorption rate would be very low. Absorption elements can greatly increase the contact surface between a liquid phase and a gas phase, thereby increasing the efficiency of a wash tower without having to increase the size of the wash tower.

The wash tower also comprises a liquid outlet for an aqueous solution comprising ammonia. The liquid outlet may be near the bottom of the wash tower. The liquid outlet may be at the lowest point of the body of the wash tower to facilitate the recovery of the aqueous solution comprising ammonia.

The liquid outlet of the wash tower is fluidly connected to the at least one liquid inlet for re-injecting the aqueous solution comprising ammonia back into the body of the wash tower. The ammonia content of the gas stream injected in the wash tower is usually quite low, for example less than 2 weight%, so it is possible to recycle the aqueous solution configured to absorb the ammonia from the gas phase. This reduces the water consumption of the plant without affecting the efficacy of the wash tower. The amount of aqueous solution from the liquid outlet that is recycled back into the wash tower determines the ammonia concentration at equilibrium in operation.

The system further comprises a heat exchanger, wherein the heat exchanger is fluidly connected to the at least one liquid inlet and the liquid outlet, and the heat exchanger is configured for cooling down a portion or the totality of the aqueous solution comprising ammonia recovered from the liquid outlet. The heat exchanger is configured to receive a portion or the totality of the aqueous solution comprising ammonia recovered from the liquid outlet of the wash tower, and to reduce the temperature of this stream by heat exchange with a cooling medium, for example water.

The heat exchanger comprises a first liquid inlet and a first liquid outlet, wherein the first liquid inlet is fluidly connected via a first liquid network to the first liquid outlet. The first liquid inlet and first liquid network are configured to receive the aqueous solution comprising ammonia from the wash tower and the first liquid outlet is connected to the liquid inlet of the wash tower.

The absorption of ammonia into water is an exothermic process. Combined with the fact that some of the aqueous solution from the liquid outlet is re-injected into the wash tower via the liquid inlet causes an increase in the temperature of the aqueous solution, thereby pushing the equilibrium of the absorption reaction back towards gaseous ammonia. By cooling the aqueous solution from the liquid outlet before re-injecting it back into the wash tower pushes the equilibrium in the desired direction, i.e., favoring the absorption of ammonia into water.

A heat exchanger configured to cool an aqueous solution may use different techniques to achieve that function. The heat exchanger may comprise cooling plates configured to receive electricity and use that electricity to cool their surfaces, cooling plates configured to contain a cooling medium, or a liquid network configured to contain a cooling medium. In some embodiments, the heat exchanger comprises a second liquid inlet and a second liquid outlet, wherein the second liquid inlet is connected via a second liquid network to the second liquid outlet. The second liquid inlet may be configured to receive a cooling medium. In some embodiments, the heat exchanger is a shell-and-tube heat exchanger comprising a second liquid inlet and a second liquid outlet, wherein the second liquid inlet is connected via a second liquid network to the second liquid outlet. In some embodiments, the heat exchanger comprises cooling plates or the heat exchanger is a shell-and-tube heat exchanger.

In some embodiments, the absorption element or section is a perforated tray or a structured packing. The process of absorbing a compound in gas phase into an aqueous solution can be greatly improved by increasing the contact area between the two phases. A perforated tray is an element, often a circular element, which is configured to let a liquid flow on it and comprises through holes to let the gas phase go through the tray. When the gas goes through a through hole, it comes into contact with the liquid and creates a bubble with a high contact area inside the liquid. A structured packing is a material that allows gas and liquid to flow within the packing and increases the contact area between the two phases.

In some embodiments, an absorption section comprises one or more perforated trays, in particular one or more perforated tray of the type valve cap tray. Valve cap trays or valve trays are perforated trays wherein the through holes configured to let the gas flow through the tray are covered by a cap on the top face, i.e., the face facing the top of the wash tower, of the tray.

In some embodiments, the wash tower comprises two absorption sections. In some embodiments, the wash tower comprises two absorption sections, wherein one absorption section comprises cooling plates, and the other absorption section comprises a structured packing.

In some embodiments, the wash tower comprises a heat-exchanging section, in particular a cooling section, wherein the heat-exchanging section or cooling section, is located between two absorption sections. Since the process of ammonia absorption into an aqueous solution is exothermic, it may be an advantage to include a cooling section in the wash tower to control the temperature of the aqueous solution. However, increasing the size of the heat-exchanging section comes at the expense of the other elements of the absorption tower, in particular the absorption section.

In some embodiments, the heat-exchanging section of the wash tower comprises cooling plates or a shell-and-tube section.

In some embodiments, the wash tower comprises two or three or four liquid inlets for injecting an aqueous solution inside the body of the wash tower. The wash tower may comprise more than one liquid inlets to inject water or an aqueous solution into its body. It has been described above that a portion of the solution recovered from the liquid outlet is re-injected into the wash tower via a liquid inlet. However, since not all the solution is recycled, there might be a need to inject more water or aqueous solution to maintain a constant liquid content in the wash tower. In some embodiments, the wash tower comprises two or more liquid inlets connected to the liquid outlet and configured to inject the aqueous solution recovered from the liquid outlet into the wash tower. It may be an advantage to inject water or an aqueous solution, for example the aqueous solution recovered from the liquid outlet, at different locations in the wash tower. This allows to better control the ammonia content and the temperature of the aqueous solution comprised in the wash tower.

In some embodiments, the wash tower comprises a liquid inlet above each of the one or more absorption sections. In some embodiments, the wash tower comprises two absorption sections and a liquid inlet above each of the two absorption sections.

In some embodiments, the wash tower comprises two absorption sections and a heat-exchanging section between the two absorption sections.

In some embodiments, the gas inlet of the wash tower is fluidly connected to an ammonia water tank.

In another aspect, the present disclosure provides a urea-producing plant comprising a system according to the first aspect of the present disclosure. The urea-producing plant comprises a synthesis section, a recovery section, an evaporation section, a finishing section, and a system according to the present disclosure. The system is configured to receive a gas stream comprising ammonia, particularly via the gas inlet, from one section selected from the group consisting of the synthesis section, the recovery section, the evaporation section, and the finishing section, and remove ammonia from the gas stream comprising ammonia.

The synthesis section comprises a reactor configured to react ammonia and carbon dioxide to produce an aqueous solution comprising urea and ammonium carbamate. The synthesis section may also comprise a high-pressure stripper and a high-pressure carbamate condenser. A high-pressure stripper is a device configured to receive an aqueous solution comprising urea and ammonium carbamate, such as the solution produced in a synthesis reactor, and to decompose some of the ammonium carbamate comprised in the solution. A high-pressure stripper is configured to produce an aqueous solution comprising urea and a lower amount of ammonium carbamate than the solution produced in the reactor. A high-pressure stripper is also configured to produce a gas stream comprising ammonia, water, and carbon dioxide, and send this gas stream to a high-pressure carbamate condenser, which is configured to condensate the gas stream produced by the high-pressure stripper into an aqueous solution comprising ammonium ions, such as ammonium carbamate, ammonium carbonate, and ammonium bicarbonate.

The recovery section is configured to receive an aqueous solution comprising urea and ammonium carbamate, and to remove most of the ammonium carbamate comprised in the aqueous solution. A recovery section may comprise one or more carbamate decomposers, one or more carbamate condensers, one or more liquid/vapor separator, and other devices.

The system according to the first aspect of the present disclosure may be comprised in the recovery section of the urea-producing plant.

The evaporation section is connected to the recovery section and configured to transform an aqueous solution comprising urea into a concentrated urea aqueous solution or a urea melt, in particular a urea melt comprising at least 95 weight%, or from 95 to 99.8 weigh% of urea. The evaporation section may comprise one or more evaporators.

The finishing section may be connected to the recovery section or the evaporation section and is configured to produce a urea-containing product, which may be a liquid product or a solid product. Some urea plants may comprise two finishing sections and configured to produce a mixture of liquid and solid products.

In some embodiments, the urea-producing plant comprises an ammonia water tank, in particular wherein the ammonia water tank is comprised in the recovery section.

In another aspect, the present disclosure provides a method for removing ammonia from a gas stream, the method comprising the steps of:
a) providing a gas stream comprising ammonia to a wash tower;
b) providing an aqueous solution to the wash tower;
c) recovering an aqueous solution with an increased ammonia content and, separately, a gas stream depleted in ammonia from the wash tower;
d) reducing the temperature of the aqueous solution recovered from the wash tower; and
e) re-introducing a portion of the aqueous solution with a reduced temperature obtained in step d) into the wash tower.

The wash tower is configured to remove ammonia from a gas stream by absorbing the ammonia into an aqueous solution. The wash tower requires two streams: a gas stream comprising ammonia and an aqueous solution. By contacting the gas stream comprising ammonia with the aqueous solution, ammonia is removed from the gas stream and absorbed by the aqueous solution.

In some embodiments, the gas stream provided to the was tower comprises a component selected from the group consisting of methane, hydrogen, nitrogen, and mixtures thereof.

In some embodiments, the gas stream comprising ammonia is introduced in the wash tower using a sparger comprised in the wash tower and connected to the gas inlet.

In some embodiments, the aqueous solution provided in step a) may comprise ammonia. The solution recovered from the liquid outlet of the wash tower comprises ammonia and a portion of the solution is re-injected into the wash tower. The solution recovered from the liquid outlet may be mixed with an additional aqueous solution, for example water, before being re-injected into the wash tower.

In some embodiments, the aqueous solution recovered from the liquid outlet and another aqueous solution, such as water, are provided to the wash tower.

In some embodiments, the aqueous solution recovered from the liquid outlet and another aqueous solution, such as water, are injected in the wash tower via two separate inlets.

In some embodiments, the gas stream comprising ammonia and provided in step a) comes from an ammonia water tank. An ammonia water tank is a container configured to hold an aqueous solution comprising ammonia. Due to the low boiling point of ammonia and low vapor pressure, an ammonia water tank may constantly emit a gas stream comprising ammonia.

In another aspect, the present disclosure provides a method for producing a urea-containing product, wherein the method comprises the steps of:
a) reacting ammonia with carbon dioxide, thereby obtaining a first aqueous solution comprising urea and ammonium carbamate;
b) processing the first aqueous solution obtained in step a) to obtain a second aqueous solution comprising urea and depleted of ammonium carbamate;
c) optionally, concentrating the second aqueous solution obtained in step b) to obtain a concentrated urea solution or a urea melt;
d) processing the second aqueous solution obtained in step b) or the urea melt obtained in step c) into a urea-containing product;
e) generating a gas stream comprising ammonia in one or more of step a), step b), step c), and step d);
f) removing ammonia from the gas stream generated in step e) according to the method according to the method described above.

Urea-producing plants may have designs that differ from each other, but they all follow the same processing steps: first, ammonia and carbon dioxide are reacted, in particular at high temperature (above 120 °C) and under high pressure (above 4.0 MPa), to create a first aqueous solution comprising urea and ammonium carbamate. Ammonium carbamate is an intermediate product in urea synthesis, and the conversion to urea is an equilibrium reaction, not a complete reaction. The first aqueous solution is processed to remove the ammonium carbamate (and some free ammonia) from it. A second aqueous solution comprising urea and depleted in ammonium carbamate is obtained. This second aqueous can be directly transformed into a urea-containing product, which may be solid or liquid. This second aqueous can also be concentrated to remove the water comprised therein to obtain a concentrated urea solution or a urea melt, which can be transformed into a urea containing-product, which may be solid or liquid.

Solid urea-containing products include solid products such as prills, granules, or pastilles, which comprise at least 1 weight%, and up to 100 weight% of urea.

Liquid urea-containing products include liquid products, such as aqueous solutions, which comprise at least 1 weight% of urea. Diesel exhaust fluid (DEF) is a product used in diesel-powered cars to reduce nitrogen oxides emissions and is an aqueous solution comprising 32.5 weight% of urea. Another popular liquid product containing urea is a UAN solution, a solution comprising urea, water, and ammonium nitrate.

All the steps mentioned above may generate a gas stream comprising ammonia as by-product. Depending on the content in ammonia and other components, such as carbon dioxide, of a gas stream, different options are available to the skilled person

In another aspect, the present disclosure provides the use of a heat exchanger for cooling the aqueous solution recovered from a liquid outlet of a wash tower configured for removing ammonia from a gas stream.

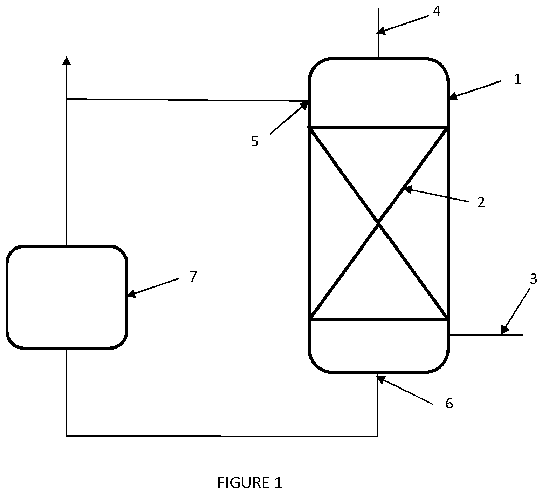

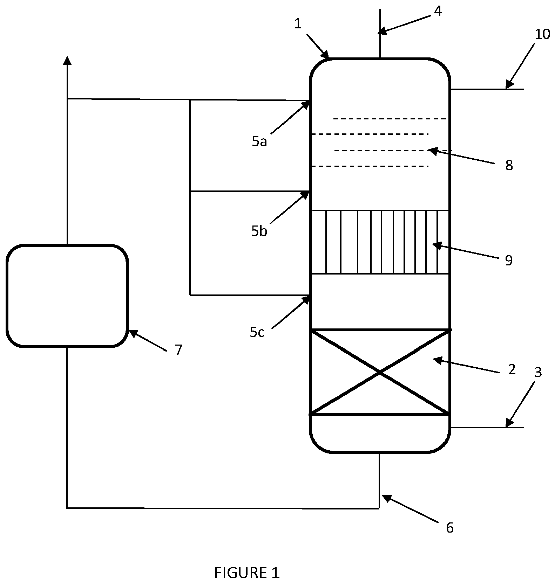

Figure 1 shows an embodiment of a system according to the present disclosure. The system comprises a wash tower (1), the wash tower being a vertical device comprising a top end and a bottom end joined by a body. The wash tower comprises a gas inlet (3) for a gas stream comprising ammonia, a gas outlet (4) for a gas stream depleted of ammonia, one liquid inlet (5) for injecting an aqueous solution inside the body of the wash tower, one absorption element (2) being a structured packing and located between the gas inlet (3) and the gas outlet (4), and a liquid outlet (6) for an aqueous solution comprising ammonia. The liquid outlet (6) is fluidly connected to the liquid inlet (5), for re-injecting a portion of the aqueous solution comprising ammonia back into the wash tower (1). The gas inlet (3) is located below the structured packing (2). The liquid inlet is located above the structured packing (2). The system also comprises a heat exchanger (7), wherein the heat exchanger (7) is fluidly connected to the liquid inlet (5) and the liquid outlet (6), and the heat exchanger (7) is configured for cooling down a portion or the totality of the aqueous solution comprising ammonia recovered from the liquid outlet (6).

Figure 2 shows another embodiment of a system according to the present disclosure. The system comprises a wash tower (1), the wash tower being a vertical device comprising a top end and a bottom end joined by a body. The wash tower comprises a gas inlet (3) for a gas stream comprising ammonia, a gas outlet (4) for a gas stream depleted of ammonia, four liquid inlets (5a, 5b, 5c, and 10) for injecting an aqueous solution inside the body of the wash tower, two absorption elements (2, 8) being a structured packing (2), and an assembly of valve cap perforated trays (8), the two absorption elements (2, 8) being located between the gas inlet (3) and the gas outlet (4), and a liquid outlet (6) for an aqueous solution comprising ammonia. The liquid outlet (6) is fluidly connected to three of the four liquid inlet (5a, 5b, and 5c), for re-injecting a portion of the aqueous solution comprising ammonia back into the wash tower (1). The fourth liquid inlet (10) is configured to inject water or an aqueous solution comprising at least 99 weight% of water into the wash tower (1). The fourth liquid inlet is located above the structured packing (2) and the valve cap trays (8). The gas inlet (3) is located below the structured packing (2). Two liquid inlets (5a, 10) are located above the valve cap trays (2).

The wash tower (1) also comprises a heat-exchanger unit (9), which is a shell-and-tube heat exchanger and is configured to cool down the aqueous solution comprising ammonia running down from the valve cap trays (8). The absorption of ammonia into water being exothermic, the temperature of the aqueous solution leaving the lowest valve cap tray is higher than the aqueous solution at the liquid inlets (5, 10). In order to increase the ammonia absorption, it was found to be an advantage to cool the aqueous solution inside the wash tower. One liquid inlet (5b) configured to inject in the wash tower (1) a portion of the aqueous solution recovered from the liquid outlet (6) is located between the valve cap trays (8) and the heat exchanging unit (9). One liquid inlet (5c) configured to inject in the wash tower (1) a portion of the aqueous solution recovered from the liquid outlet (6) is located between the heat-exchanging unit (9) and the structured packing (2). The system also comprises a heat exchanger (7), wherein the heat exchanger (7) is fluidly connected to the liquid inlet (5) and the liquid outlet (6), and the heat exchanger (7) is configured for cooling down a portion or the totality of the aqueous solution comprising ammonia recovered from the liquid outlet (6).

## Claims

1. A system comprising a wash tower, the wash tower being a vertical device comprising a top end and a bottom end joined by a body, the wash tower comprising:
a) a gas inlet for a gas stream comprising ammonia,
b) a gas outlet for a gas stream depleted of ammonia,
c) at least one liquid inlet for injecting an aqueous solution inside the body of the wash tower,
d) one or more absorption sections located between the gas inlet and the gas outlet, and
e) a liquid outlet for an aqueous solution comprising ammonia, wherein the liquid outlet is fluidly connected to the at least one liquid inlet, for re-injecting a portion of the aqueous solution comprising ammonia back into the body of the wash tower,
**characterized in that** the system further comprises a heat exchanger, wherein the heat exchanger is fluidly connected to the at least one liquid inlet and the liquid outlet, and the heat exchanger is configured for cooling down a portion or the totality of the aqueous solution comprising ammonia recovered from the liquid outlet.

2. The system according to claim 1, wherein the one or more absorption sections comprise a perforated tray or a structured packing.

3. The system according to claim 1 or 2, wherein the wash tower comprises a heat-exchanging section, in particular wherein the wash tower comprises two or more absorption sections and wherein the heat-exchanging section is located between two absorption sections.

4. The system according to any one of claims 1 to 3, wherein the wash tower comprises two or three or four liquid inlets for injecting an aqueous solution inside the body of the wash tower.

5. The system according to any one of claims 1 to 4, wherein the heat exchanger comprises cooling plates or the heat exchanger is a shell-and-tube heat exchanger.

6. The system according to any one of claims 3 to 5, wherein the heat-exchanging section of the wash tower comprises cooling plates or a shell-and-tube section.

7. The system according to any one of claims 1 to 6, wherein the wash tower comprises a liquid inlet above each of the one or more absorption sections.

8. The system according to any one of claims 3 to 6, wherein the wash tower comprises a liquid inlet above each of the heat-exchanging sections.

9. A urea-producing plant comprising a synthesis section, a recovery section, an evaporation section, a finishing section, and a system according to any one of claims 1 to 8.

10. A method for removing ammonia from a gas stream, the method comprising the steps of:
a) providing a gas stream comprising ammonia to a wash tower;
b) providing an aqueous solution to the wash tower;
c) recovering an aqueous solution with an increased ammonia content and, separately, a gas stream depleted in ammonia from the wash tower;
d) reducing the temperature of the aqueous solution recovered from the wash tower; and
e) re-introducing a portion of the aqueous solution with a reduced temperature obtained in step d) into the wash tower.

11. The method according to claim 10, wherein the method is performed in a system according to any one of claims 1 to 9.

12. A method for producing a urea-containing product, wherein the method comprises the steps of:
a) reacting ammonia with carbon dioxide, thereby obtaining a first aqueous solution comprising urea and ammonium carbamate;
b) processing the first aqueous solution obtained in step a) to obtain a second aqueous solution comprising urea and depleted of ammonium carbamate;
c) optionally, concentrating the second aqueous solution obtained in step b) to obtain a concentrated urea solution or a urea melt;
d) processing the second aqueous solution obtained in step b) or the concentrated urea solution or the urea melt obtained in step c) into a urea-containing product;
e) generating a gas stream comprising ammonia in one or more of step a), step b), step c), and step d);
f) removing ammonia from the gas stream generated in step e) according to the method according to claim 10 or 11.

13. The use of a heat exchanger for cooling the aqueous solution recovered from a liquid outlet of a wash tower, wherein the wash tower is configured for removing ammonia from a gas stream.
